# EUROPEAN PATENT APPLICATION

(11) **EP 0 949 751 A2**
(43) Date of publication of application: **13.10.1999**
(21) Application number: 99105180.6
(22) Date of filing: 31.03.1999
(51) Int. Cl.: H02M 3/335

(54) **Generator for arc welding machines with forward topology and active clamp**

(30) Priority: 10.04.1998 IT PD980086
(71) Applicant: SELCO S.r.L., I-35010 Onara di Tombolo (Padova) (IT)
(72) Inventor: Mela, Franco, 35016 Piazzola sul Brenta, (Padova) (IT); Marchetti, Maurizio, 36027 Rosa' (Vicenza) (IT)
(74) Representative: Modiano, Guido, Dr.-Ing.

(57) **Abstract**

A generator for arc welding machines with forward topology and active clamp. In a CC/CC converter, a transformer reset network is branched off from the primary winding (103) of a transformer (104), which is affected by a flow of current controlled by a main switch (S1) which is driven by a control unit (110) which is sensitive to the characteristics of the welding current; the reset network is formed by a capacitor (112) which is connected in series to a switch (S2) which controls only the magnetization current of the transformer during the open interval of the main switch (S1).

## Description

The present invention relates to a generator for arc welding machines with forward topology and active clamp.

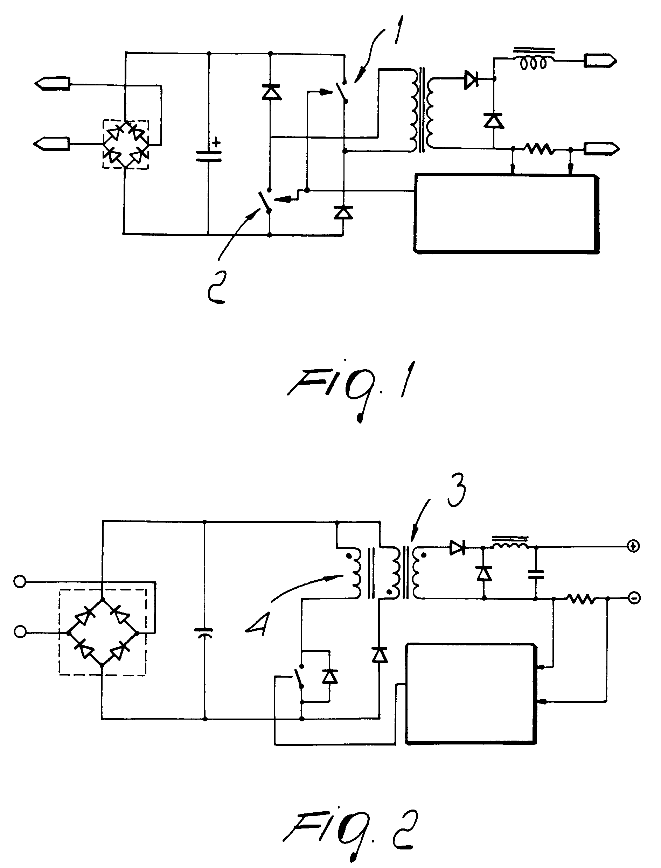

Forward-topology CC/CC converters are known; a classic layout is shown in Figure 1.

In this topology there are two switches, designated by the reference numerals 1 and 2; in practical execution, this entails considerable circuit complexity.

Single-switch topologies, known as offline single-ended DC/DC converters, have been devised in order to overcome this drawback; an exemplifying diagram thereof is shown in Figure 2.

In this solution there is a transformer 3 with an auxiliary winding 4 which is required to demagnetize said transformer.

In order to contain the voltage level of the switch, this configuration uses, for the auxiliary winding, the same number of turns as the primary winding of the transformer.

This configuration allows to adopt a single switch but suffers some drawbacks:
-- the magnetic material of which the transformer is made is not used efficiently, because flux variation occurs only toward positive inductions;
-- the presence of the auxiliary winding makes it troublesome to manufacture the transformer, both because it is difficult to ensure good coupling between the primary winding and the secondary winding, which causes overvoltages across the switch, and because the presence of the auxiliary winding tends to increase the leakage inductance between the primary and secondary windings, which is detrimental because it causes overvoltages across the diodes at the secondary winding;
-- by adopting a number of turns of the auxiliary winding which is equal to the number of turns of the primary winding in order to maintain the maximum voltage across the terminals at twice the input DC voltage, the maximum duty cycle is limited to 50%; this reduces the adjustment range of the converter and forces reduced transformation ratios.

The aim of the present invention is to provide a generator which still uses a single power switch but in which the above mentioned drawbacks have been eliminated.

Within this aim, an object of the invention is to provide a more efficient utilization of the magnetic material.

A further object of the invention is to eliminate the auxiliary winding of the transformer.

Another object of the invention is to limit the voltage stresses of the power switch.

Another object of the invention is to increase the adjustment range of the converter to duty cycles higher than 50%.

A further object of the invention is to recover the magnetizing energy.

A still further object of the invention is to reduce the switching losses present in the power switch.

This aim, these objects and others which will become apparent hereinafter are achieved by a generator for arc welding machines of the DC/DC converter type with forward topology and active clamp, characterized in that it comprises a transformer with a primary and a secondary windings, the primary winding being affected by a flow of current controlled by a main switch which is driven by a control unit which is sensitive to the characteristics of the welding current, a transformer reset network being branched off from said primary winding, said reset network being formed by a capacitor which is connected in series to an auxiliary switch which controls only the magnetization current during the open interval of the main switch.

Further characteristics and advantages of the invention will become apparent from the description of preferred embodiments, given by way of non-limitative example and shown, together with diagrams of the state of the art, in the accompanying drawings, wherein:
Figure 1 is a circuit diagram of a conventional forward converter with two power switches;
Figure 2 is a circuit diagram of a conventional welding generator with a single power switch and with a transformer provided with an auxiliary winding;
Figure 3 is a circuit diagram of the generator according to the invention, in a flyback configuration type;
Figures 4 and 5 are circuit diagrams of two embodiments of the diagram of Figure 3, with a boost-type configuration;
Figure 6 is a circuit diagram of another embodiment of the invention, in which main switch turn-on occurs when the voltage across it is zero;
Figure 7 is a circuit diagram, in block form, which illustrates the functional blocks that implement the control of the generator according to the invention;
Figure 8 plots the time charts related to the management of the main switch and of the auxiliary switch of the generator according to the present invention.

With reference to the accompanying drawings, Figures 1 and 2 have already been discussed in the presentation of the state of the art.

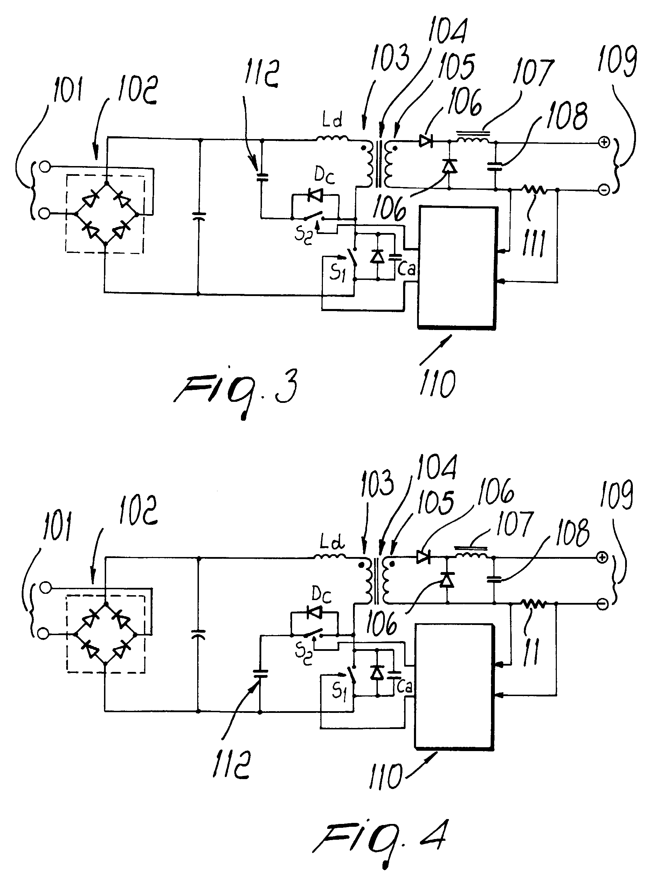

Figure 3 is the basic circuit diagram of the generator according to the invention, illustrating its fundamental components.

A rectifier bridge 102 is powered by the mains 101 and rectifies the mains current, sending it to the primary winding 103 of a transformer 104 in which the secondary winding 105, with the interposition of normal systems provided with diodes 106, an inductor 107 and a capacitor 108, supplies the terminals 109 from which the welding arc, not shown, receives current.

A current flows through the primary winding 103 of the transformer 104 when the main power switch S1 is closed; the closure of switch S1 is controlled by a control unit 110 which operates in relation to the welding current detected across a resistor 111 which is series-connected to the arc circuit.

The same control unit 110 also drives an auxiliary switch S2 which closes the primary winding 103 across a capacitor 112.

The network constituted by the capacitor 112 and by the switch S2 is the transformer reset network and it can be seen that the auxiliary switch S2 has to handle only the transformer magnetization current during the open interval of the main switch.

For this reason, the auxiliary switch S2 is not a power switch and the configuration is highly simplified, since the auxiliary winding on the transformer is not necessary and there is no dissipative network, i.e., a resistor which is series-connected to the auxiliary switch.

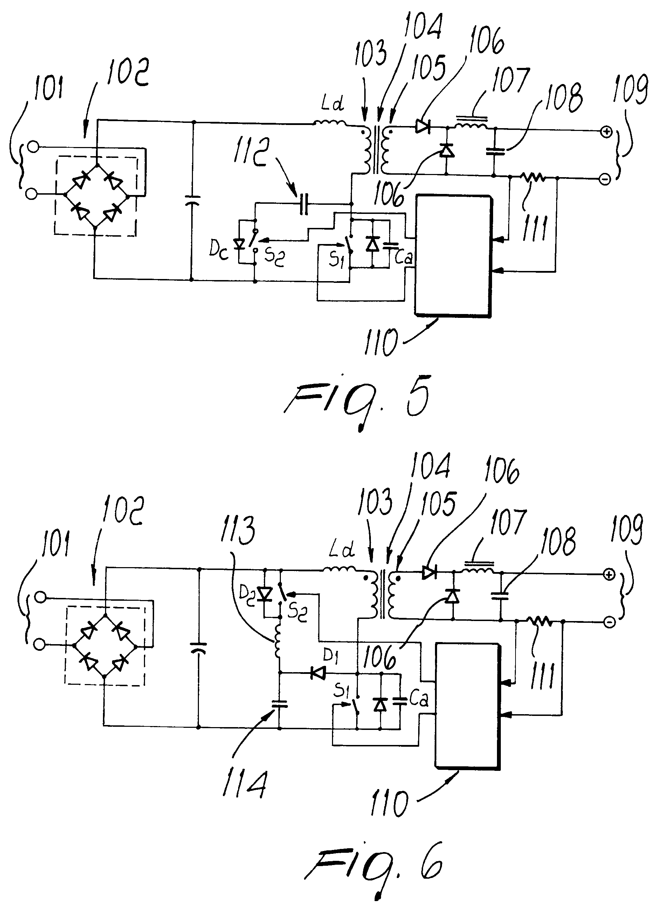

The circuit of Figure 3 can be defined as a flyback-type circuit, while the circuits of Figures 4 and 5 can be termed boost-type circuits.

The operation of these reset circuits shown in Figures 4 and 5 is identical to the operation of the circuit of Figure 3; the only difference is the fact that the voltage across the capacitor 112 is higher.

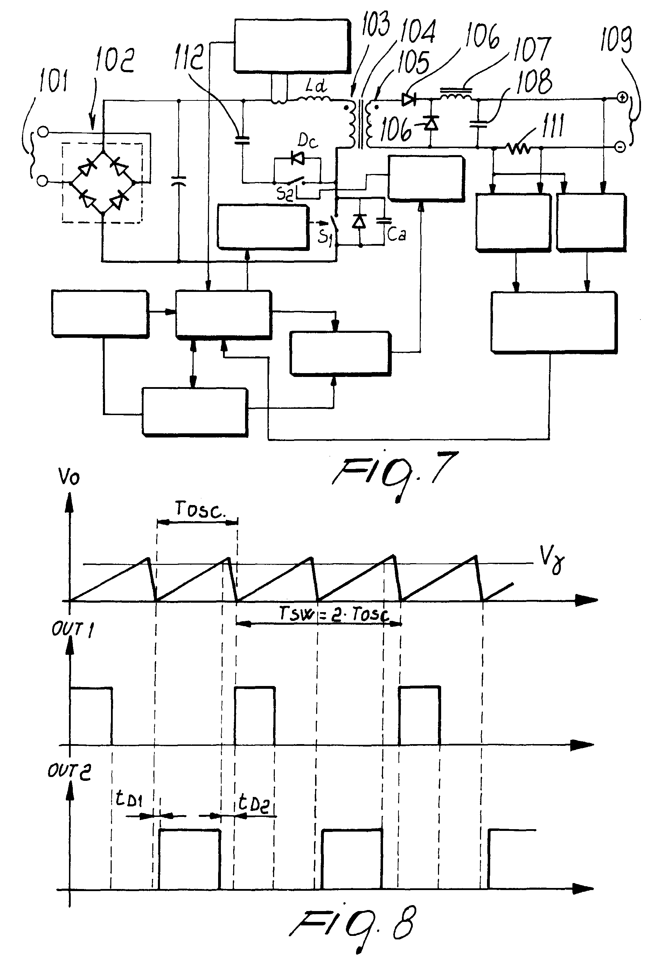

Figure 6 illustrates another embodiment of the invention which uses the diagram of a configuration of the forward type with active clamp, termed "active clamp with zero voltage transition", which has the particularity that turn-on of the main switch S1 occurs at zero voltage by means of the resonance between the inductor 113 and the capacitor 114.

These configurations have many advantages.

In particular:
-- no auxiliary windings or dissipative clamp networks for resetting the transformer are necessary;
-- there are no limitations to the maximum duty cycle;
-- high values of the turns ratio N are possible, and this entails a considerable reduction in current stresses at the primary winding and in voltage stresses at the secondary winding;
-- the energy stored in the parasitic elements (leakage inductance and parasitic capacitors of the switches) is conveyed into the clamp capacitor and is then returned on the power supply side, thus increasing the efficiency of the generator and allowing a reduction in electromagnetic emissions;
-- the voltage stresses across the main switch are reduced and relatively constant over the entire variation range of the input voltage;
-- it is possible to obtain zero-voltage switchings for the main and auxiliary switches, thus allowing to reduce switching losses and to operate at higher frequencies, with a consequent reduction in the magnetic parts of said generator.

This is allowed, in the diagrams of Figures 3, 4 and 5, by the presence of the leakage inductance of the transformer Ld and of the total parasitic capacitance Ca across the main switch S1.

The former can be optionally increased with the aid of an external component or by reducing the coupling factor between the primary winding and the second windings, whilst the latter can be increased by adding an external component.

In the diagram of Figure 6, this is achieved by means of the resonance of the inductance 113 and capacitor 114 which provide the reset network.

Figure 7 is the diagram of the converter as implemented in a preferred embodiment.

The topology used has the above listed advantages, but in transient conditions, due to the variation of the load or to variations in the input voltage, asymmetries can occur in the magnetization of the power transformer, owing to the fact that it is reset by the voltage across the clamp capacitor, which cannot vary its value instantaneously.

Accordingly, some switching cycles are necessary to allow the system to resume a steady-state condition in which the magnetization of the transformer is again perfectly symmetrical.

The described imbalances can bring the transformer close to saturation, consequently endangering the components that provide the switches.

The diagram of Figure 7 clearly shows the functional blocks that implement the control of the converter in order to solve the above mentioned critical aspects, thus allowing to provide a welding generator with a forward topology and an active clamp.

Block B provides current-mode control, processing the signals supplied to it and suitably driving the main switch S1.

In particular, block E generates the sawtooth signal Vo plotted in Figure 8.

Said signal provides a fixed reference whose frequency is twice the intended switching frequency of the converter.

The block B, driven by the signal Vo, drives, by means of interface block I, the turn-on of the main switch S1, thus activating, at each cycle, the powering step of the converter, i.e., the step during which power is transferred from the primary circuit toward the secondary circuit.

When S1 is on, block A converts the current signal that arrives from the sensor connected to the primary winding into a voltage signal which is proportional to said current that flows through the primary winding.

Said signal is made available to block B, where it is compared with the reference signal related to the peak current that arrives from the error amplifier implemented by block F.

In particular, when the signal of block A reaches the value set by block F, block B drives the turn-off of the switch S1, starting the reset phase of the transformer.

As described, block F sets the peak value of the primary current so as to have the intended welding current on the secondary winding side.

Said current is monitored by block G.

In particular, this last stage draws a voltage signal which is proportional to the welding current, conditions it and makes it available to block F.

Therefore, the chain formed by blocks A, E, G, and F coordinated by block B, which generates the driving signal OUT1, together with interface block I, which drives the main switch S1, implements the current-mode control of the welding current.

The auxiliary switch S2, managed by the control signal OUT2, shown in Figure 8, is instead turned on during the transformer reset step, which as described above begins when the switch S1 is turned off.

Starting from the sawtooth signal generated by block E, block C generates the necessary on and off timings for the auxiliary switch S2.

In particular, the turn-on delay time td1 shown in Figure 8 is set by means of a time constant generated by an RC circuit, while the delay td2 is obtained by setting the reference signal V and comparing said signal with the signal Vo generated by block E.

Block D instead synchronizes the control signal of the auxiliary switch that arrives from block C with the control signal of the main switch generated by block B.

This synchronization is indispensable and fundamental for the operation of the converter in all the static and dynamic load conditions which are typical of arc welding, since the correct reset of said transformer depends on said synchronization.

In summary, the combination of blocks E, C and D generates the control signal OUT2, shown in Figure 8, which by being appropriately interfaced by driving block L provides the correct management of the auxiliary switch S2 which is responsible for the correct reset of the transformer in each cycle.

Figure 8 plots the time charts related to the management of the switches S1 (signal OUT 1) and S2 (signal OUT 2).

Starting from the sawtooth signal Vo generated by the oscillator, at a frequency which is twice the intended switching frequency of the generator, comparison with the reference signal V is performed by means of a fast comparator.

The result of the comparison, signal COMP, determines the control signal OUT2, with the necessary delay times td1 and td2.

In particular, the resistance and capacitance values of the circuit determine the duration of the interval td1, while the value of the reference voltage V allows to determine the duration of the interval td2.

The delay td2 is crucial, since by choosing it appropriately according to the resonance between the leakage inductance Ld and the capacitance of the main switch Ca it allows to provide zero-voltage main switch turn-on, consequently reducing the switching losses of said switch.

From the above description and from the illustrations it is evident that the aim and the intended objects have all been achieved advantageously.

The values and the type of the components may of course be chosen according to the design power levels.

The disclosures in Italian Patent Application No. PD98A000086 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A generator for arc welding machines of the DC/DC converter type with forward topology and active clamp, characterized in that it comprises a transformer with a primary and a secondary windings, the primary winding being affected by the flow of current controlled by a main switch which is driven by a control unit which is sensitive to the characteristics of the welding current, a transformer reset network being branched off from said primary winding, said reset network being formed by a capacitor which is connected in series to an auxiliary switch which controls only the magnetization current during the open interval of the main switch.

2. The generator according to claim 1, characterized in that said reset network is constituted by said auxiliary switch with said capacitor series-connected thereto and branched off the terminals of the primary winding of the transformer.

3. The generator according to claim 1, characterized in that the reset network is constituted by said auxiliary switch with said clamp capacitor series-connected thereto said network being connected across the main switch, with the auxiliary switch connected to a common node between the main switch and the terminal of the primary winding of the transformer.

4. The generator according to claim 1, characterized in that said reset network is constituted by said auxiliary switch and by said capacitor, said network being connected across the main switch with the capacitor connected to a common node between the main switch and the terminal of the primary winding of the transformer.

5. The generator according to claim 1, characterized in that said reset network comprises, an inductor which resonates with said capacitor, allowing to turn on the main switch when the voltage across it is zero.
